# FASCICULE DE BREVET EUROPEEN

(11) **EP 1 454 074 B1**
(45) Date de publication et mention de la délivrance du brevet: **14.02.2007**
(21) Numéro de dépôt: 02805386.6
(22) Date de dépôt: 13.12.2002
(51) Int. Cl.: F16D 11/04, F16D 49/04

(54) **DISPOSITIF D ACCOUPLEMENT A CRABOT**
KLAUENKUPPLUNGSVORRICHTUNG
DOG CLUTCH DEVICE

(30) Priorité: 14.12.2001 FR 0116161
(43) Date de publication de la demande: 08.09.2004
(73) Titulaire: Thales, 75008 Paris (FR)
(72) Inventeur: SKORUCAK, Bela, Thales Intellectual Property, F-94117 Arcueil Cedex (FR)
(74) Mandataire: Collet, Alain
(86) Numéro de dépôt international: PCT/FR2002/004348
(87) Numéro de publication internationale: WO 2003/054404

(56) Documents cités:
- GB-A- 2 307 531
- US-A- 2 509 813
- US-A- 4 269 293

## Description

L'invention se rapporte à un dispositif d'accouplement de deux arbres destinés à tourner dans le prolongement l'un de l'autre, selon le préambule de la revendication 1. Un tel dispositif est connu par exemple du document US-2 509 813. Un crabot assure l'accouplement des deux arbres. Un crabot comporte généralement des dents ou des griffes appartenant à chacun des deux arbres. Lorsque les dents (ou les griffes) coopèrent entre elles, les deux arbres sont accouplés. Un dispositif d'accouplement à crabot comporte également des moyens pour écarter les dents de chaque arbre afin de les désaccoupler. Ces moyens seront appelés moyens de décrabotage pour la suite de la description.

Des moyens connus de décrabotage nécessitent l'arrêt de la rotation des deux arbres ainsi qu'un effort extérieur important permettant d'écarter les dents. En effet, les dents sont généralement maintenues en contact au moyen d'un ressort et il est donc nécessaire de vaincre l'effort de ce ressort pour décraboter.

L'invention a pour but de pallier ces difficultés en proposant un dispositif d'accouplement à crabot dans lequel les moyens de décrabotage peuvent désaccoupler les arbres même lorsque ceux-ci sont en rotation. Permettre un désaccouplage en rotation permet d'utiliser les moyens de décrabotage comme organe de sécurité. Ils permettent de désaccoupler rapidement sans attendre l'arrêt de la rotation.

A cet effet, l'invention a pour objet un dispositif d'accouplement de deux arbres destinés à tourner par rapport à un carter, dans le prolongement l'un de l'autre sensiblement autour d'un axe, comme décrit dans la revendication 1.

L'invention permet, en outre, de réduire considérablement l'effort nécessaire au décrabotage. Grâce à l'invention, l'effort nécessaire à l'écartement des dents du crabot n'est plus fourni par des moyens extérieurs au dispositif mais par le dispositif lui-même et, plus précisément, par l'énergie de rotation des arbres.

L'invention permet également de réduire de façon importante la masse des moyens de décrabotage et d'augmenter leur compacité.

L'invention sera mieux comprise et d'autres avantages apparaîtront à la lecture de la description détaillée d'un mode de réalisation de l'invention donné à titre d'exemple, description illustrée par le dessin joint dans lequel :
- la figure 1 représente un dispositif d'accouplement en position crabotée,
- la figure 2 représente le dispositif d'accouplement en position décrabotée,
- la figure 3 représente en vue agrandie le frein du dispositif d'accouplement.

Pour simplifier la suite de la description, les mêmes éléments porteront les mêmes repères dans les différentes figures.

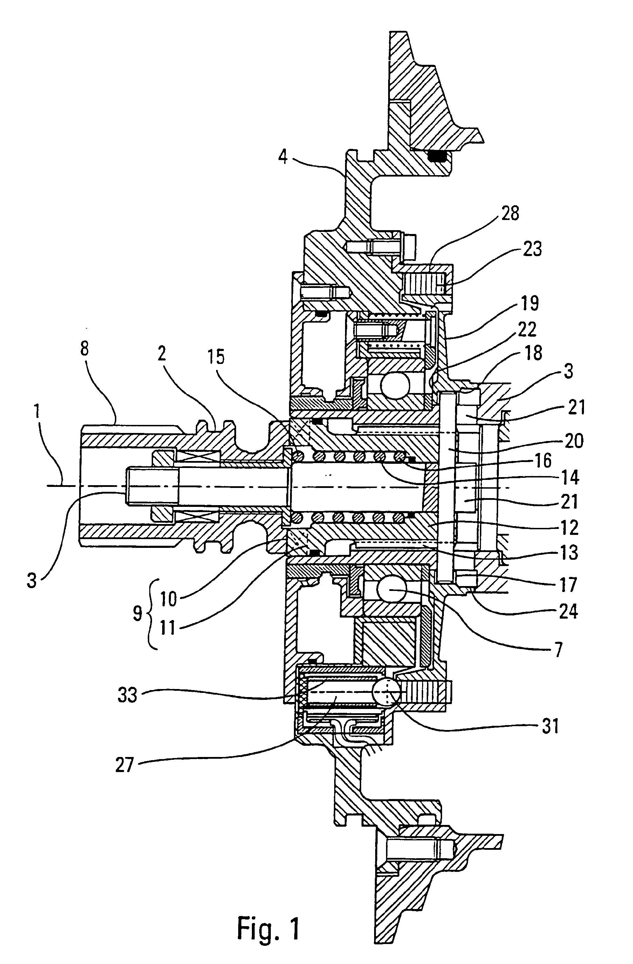

Sur la figure 1, un dispositif d'accouplement est représenté en coupe selon un plan comprenant un axe 1 autour duquel deux arbres 2 et 3 peuvent tourner par rapport à un carter 4. L'arbre 3 est par exemple celui du rotor d'un moteur électrique. Un palier tournant comportant par exemple un roulement 7 permet la rotation de l'arbre 3 par rapport au carter 4, la rotation se faisant autour de l'axe 1. L'arbre 2 permet par exemple d'accoupler le moteur électrique à une boîte relais (non représentée) par l'intermédiaire de cannelures 8.

Un crabot 9 permet d'accoupler et de désaccoupler les arbres 2 et 3. Selon l'exemple représenté, le crabot 9 comporte une première série de dents 10 solidaires de l'arbre 2 et une deuxième série de dents 11 solidaires d'une extrémité 12 de l'arbre 3. L'extrémité 12 est mobile en translation selon l'axe 1 par rapport à l'arbre 3. Une liaison en rotation de l'extrémité 12 selon l'axe 1 par rapport à l'arbre 3 est assurée au moyen de cannelures 13. Les dents 10 et les dents 11 coopèrent entre elles de façon à assurer l'entraînement de l'arbre 2 par l'arbre 3 lorsque le dispositif d'accouplement est en position crabotée. Il est bien entendu que l'invention n'est pas limitée à l'entraînement de l'arbre 2 par l'arbre 3. L'inverse est également possible par exemple si le moteur électrique est utilisé en mode générateur de courant électrique.

Un ressort hélicoïdal 14 tend à maintenir écartées les dents 10 et 11. Le ressort 14 s'appuie à sa première extrémité 15 sur l'arbre 3 et à sa seconde extrémité 16 sur l'extrémité 12. Lorsque les dents 11 et 12 sont en contact, le dispositif d'accouplement est en position crabotée et le ressort 14 est comprimé.

Des moyens de décrabotage permettent de désaccoupler le crabot 9. Plus précisément, ces moyens permettent d'écarter les dents 10 des dents 11 pour obtenir une position décrabotée du dispositif d'accouplement.

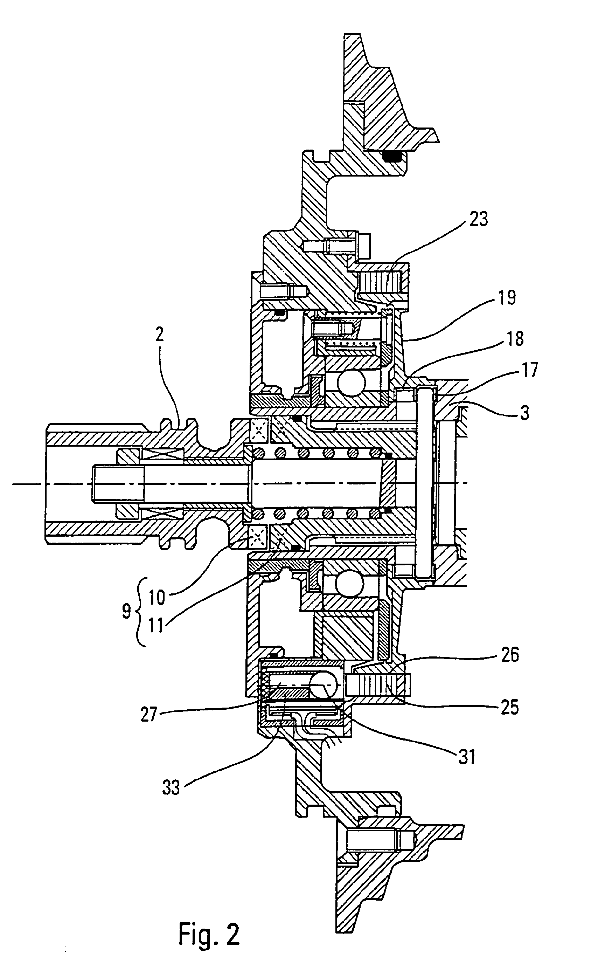

La position décrabotée sera décrite ultérieurement à l'aide de la figure 2. Pour écarter les dents 10 des dents 11, les moyens de décrabotage relâchent le ressort 14 en opérant un mouvement de translation de l'extrémité 12 par rapport à l'arbre 3.

Selon l'invention, les moyens de décrabotage comportent une vis 17 solidaire de l'arbre 3 et un écrou 18 solidaire d'un volant 19. La vis 17 et l'écrou 18 coopèrent ensemble et leur axe est sensiblement confondu avec l'axe 1 Plus précisément, la vis 17 est solidaire de l'extrémité 12 de l'arbre 3. Le maintien de la vis 17 avec l'extrémité 12 est, par exemple, assuré par une goupille 20. Par ailleurs, la goupille 20 traverse un trou oblong 21 ménagé dans l'arbre 3 afin de permettre la translation de l'extrémité 12 par rapport à l'arbre 3.

En position crabotée, l'écrou 18 est serré sur la vis 17. Le volant 19 comporte une butée 22 sur laquelle s'appuie la vis 17. Cet appui assure le serrage de l'écrou 18 sur la vis 17. En position crabotée, le volant 19 a le même mouvement, mouvement de rotation par rapport au carter 4, que l'arbre 3 et son extrémité 12.

Les moyens de décrabotage comportent, en outre, un frein 23 de la rotation du volant 19 par rapport au carter 4. En position crabotée, le frein 23 n'est pas actif et le volant 19 tourne librement par rapport au carter 4 autour de l'axe 1. Lorsqu'on souhaite décraboter le crabot 9, c'est-à-dire écarter les dents 10 et 11, afin que les dents 10 n'entraînent plus les dents 11 ou inversement, on actionne le frein 23 jusqu'à desserrer l'écrou 18 de la vis 17. Le volant 19 ne possède qu'un degré de liberté en rotation autour de l'axe 1 par rapport au carter 4. En conséquence, le desserrage de l'écrou 18 par rapport à la vis 17 permet la translation de l'extrémité 12 par rapport à l'arbre 3 suivant l'axe 1 et donc l'écartement des dents 10 et 11.

Avantageusement, le dispositif, lorsqu'il est en position décrabotée, comporte des moyens pour permettre la rotation de la vis 17 indépendamment de l'écrou 18. Ces moyens pour permettre la rotation de la vis 17 comportent une gorge 24, appartenant au volant 19, gorge 24 à l'intérieur de laquelle, la vis 17 peut tourner librement, indépendamment de l'écrou 18. Les moyens pour permettre la rotation de la vis 17 comportent en outre un élément élastique assurant, en position décrabotée, le maintien de la vis 17 à l'intérieur de la gorge 24.

Plus précisément, la gorge 24 est réalisée dans le volant 19. La gorge 24 est intérieure et cylindrique d'axe 1. Son diamètre est supérieur au diamètre nominal du filetage de la vis 17. La gorge 24 peut contenir la vis 17 après desserrage complet de l'écrou 18. Lorsque la vis 17 est située à l'intérieur de la gorge 24, le décrabotage est effectif et la translation de l'extrémité 12 est complète. L'élément élastique est formé par le ressort 14 qui assure le maintien de la vis 17 à l'intérieur de la gorge 24 sans que les filets de la vis 17 ne puissent venir en prise avec le taraudage de l'écrou 18.

Ainsi, l'arbre 3 peut poursuivre sa rotation même si le frein 23 a arrêté la rotation du volant 19. Ainsi, le frein 23 n'est utilisé que pour le freinage du volant 19 et pas pour freiner la rotation de l'arbre 3. En effet, l'inertie de l'arbre 3 peut être importante, par exemple si l'arbre 3 est l'arbre rotor d'un moteur électrique. Toutes les constituantes du rotor participeraient à l'inertie de l'arbre 3. La fonction du frein 23, limitée au freinage du volant 19, permet de réduire les dimensions du frein 23.

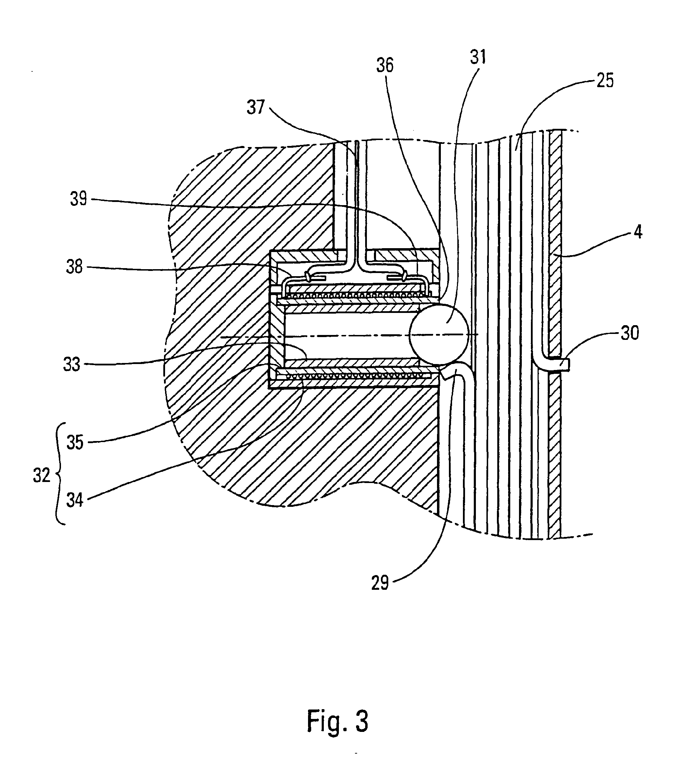

La figure 3 représente en vue agrandie le frein 23. Il s'agit d'une vue développée en coupe par une surface cylindrique d'axe 1. Le frein 23 comporte un élément de friction 25 destiné à frotter contre une surface 26 du volant 19. La surface 26 est de révolution autour de l'axe 1. Le frein 23 comporte, en outre, des moyens 27 pour commander le frein 23. Lorsque les moyens 27 sont au repos, ils maintiennent l'élément de friction 25 éloignés de la surface 26 et lorsque les moyens 27 sont activés, ils permettent à l'élément de friction 25 de venir au contact de la surface 26. La vue représentée sur la figure 3 est partielle et représente essentiellement les moyens pour commander le frein 23 et en partie l'élément de friction 25.

Avantageusement, l'élément de friction 25 formé par un ressort hélicoïdal dont le diamètre intérieur est variable en fonction de la tension du ressort. Pour simplifier la suite de la description, le ressort hélicoïdal portera le repère 25. Le ressort hélicoïdal 25 est monté dans un logement 28 cylindrique intérieur d'axe 1 du carter 4. Ainsi le ressort hélicoïdal 25 s'enroule autour de l'axe 1. Lorsque les moyens 27 sont au repos, le ressort hélicoïdal 25 est bandé et maintenu à distance de la surface 26 du volant 19. Le ressort hélicoïdal 25 est bandé en appliquant à l'une 29 de ses extrémités un mouvement de rotation autour de l'axe 1 de façon à augmenter le diamètre du ressort hélicoïdal 25.

Lorsque les moyens 27 sont activés, le ressort hélicoïdal 25 est relâché et il vient au contact de la surface 26 du volant 19 afin de freiner la rotation du volant 19 autour de l'axe 1. Plus précisément, lorsque les moyens 27 sont activés, ils relâchent l'extrémité 29 du ressort hélicoïdal 25 dont le diamètre intérieur se réduit jusqu'à venir au contact de la surface 26 du volant 19 et ainsi le freiner. Une seconde extrémité 30 du ressort hélicoïdal 25 est, quant à elle, maintenue en position fixe par rapport au carter 4.

Avantageusement, les moyens 27 pour commander le frein 23 comportent une bille 31 ainsi que des moyens 32 pour déplacer la bille 31 d'une première position dans laquelle la bille 31 maintient le ressort hélicoïdal 25 bandé vers une deuxième position dans laquelle le ressort hélicoïdal 25 est relâché. La première position est visible sur les figures 1 et 3. La deuxième position de la bille 31 est visible sur la figure 2.

Les moyens 32 pour déplacer la bille 31 comportent un élément fusible 33 qui est représenté à l'état solide sur les figures 1 et 3. Dans l'état solide, l'élément fusible 33 maintient la bille 31 dans la première position dans laquelle elle maintient l'extrémité 29 du ressort hélicoïdal 25. Lorsque l'élément fusible 33 est à l'état liquide, état représenté sur la figure 2, la bille 31 est entraîné par le ressort hélicoïdal 25 ou, plus précisément, par son extrémité 29, vers la deuxième position.

Avantageusement, les moyens 32 pour déplacer la bille 31 comportent, en outre, une résistance électrique 34 susceptible de chauffer l'élément fusible 33 par effet Joule. Plus précisément, la bille 31 peut coulisser à l'intérieur d'un cylindre 35. La bille 31 est maintenue au voisinage d'une extrémité 36 du cylindre 35 dans la première position par l'élément fusible 33. La résistance électrique 34 est formée par un fil bobiné sur une paroi extérieure du cylindre 35. La résistance électrique 35 est raccordée à un câble d'alimentation électrique 37 par deux plots de connexion 38 et 39. Lorsque l'on veut commander le frein 23, on fait circuler dans la résistance électrique 34 par le câble d'alimentation 37 un courant suffisant pour chauffer le cylindre 35 et, par conséquent, l'élément fusible 33 qui se liquéfie. Ainsi la bille 31 peut passer de la première à la deuxième position en libérant l'extrémité 29 du ressort hélicoïdal 25. A titre d'alternative, il est possible de commander le déplacement de la bille 31 au moyen d'un électroaimant remplaçant l'élément fusible 33.

## Revendications

1. Dispositif d'accouplement de deux arbres (2, 3) destinés à tourner par rapport à un carter (4), dans le prolongement l'un de l'autre sensiblement autour d'un axe (1), le dispositif comportant un crabot (9) permettant à un des arbres (3) d'entraîner l'autre (2) et des moyens de décrabotage permettant de désaccoupler le crabot (9) d'une position crabotée vers une position décrabotée, les moyens de décrabotage comportant une vis solidaire d'un des arbres (3), un écrou solidaire d'un volant (19) et coopérant avec la vis (17), la vis (17) et l'écrou (18) étant d'axe sensiblement confondu avec l'axe (1) de rotation des arbres (2, 3), un frein (23) de la rotation du volant (19) par rapport au carter (4), en position crabotée, le freinage du volant (19) desserrant l'écrou (18) de la vis (17) et entraînant un des arbres (3) en translation suivant ledit axe (1) de façon à désaccoupler le crabot (9), le frein (23) comportant un élément de friction (25) destiné à frotter contre une surface (26) du volant (19) lors du freinage et des moyens (27) pour commander le frein (23), **caractérisé en ce que** l'élément de friction (25) est formé par un ressort hélicoïdal (25) dont le diamètre intérieur est variable en fonction de la tension du ressort hélicoïdal (25), afin de venir au contact de la surface (26) du volant (19) lors du freinage.

2. Dispositif selon la revendication 1, **caractérisé en ce que**, lorsque les moyens (27) pour commander le frein (23) sont au repos, le ressort hélicoïdal (25) est bandé et est maintenu à distance de la surface (26) du volant (19) et **en ce que** lorsque les moyens (27) pour commander le frein (23) sont activés, le ressort hélicoïdal (25) est relâché et le ressort hélicoïdal (25) est au contact de la surface (26) du volant (19).

3. Dispositif selon la revendication 2, **caractérisé en ce que** les moyens (27) pour commander le frein (23) comportent une bille (31) et des moyens (32) pour déplacer la bille (31) d'une première position dans laquelle la bille (31) maintient le ressort hélicoïdal (25) bandé, vers une deuxième position dans laquelle le ressort hélicoïdal (25) est relâché.

4. Dispositif selon la revendication 3, **caractérisé en ce que** les moyens (32) pour déplacer la bille (31) comportent un élément fusible (33), **en ce que** lorsque l'élément fusible (33) est à l'état solide, il maintient la bille (31) dans la première position et **en ce que**, lorsque l'élément fusible (33) est à l'état liquide, la bille (31) est entraînée par le ressort hélicoïdal (25) vers la deuxième position.

5. Dispositif selon la revendication 4, **caractérisé en ce que** les moyens (32) pour déplacer la bille (31) comportent une résistance électrique (34) susceptible de chauffer l'élément fusible (33) par effet Joule.

6. Dispositif selon l'une des revendications précédentes, **caractérisé en ce qu'**il comporte des moyens (14, 24) pour permettre la rotation de la vis (17) indépendamment de l'écrou (18) en position décrabotée.

7. Dispositif selon la revendication 6, **caractérisé en ce que** les moyens pour permettre la rotation de la vis (17) comportent une gorge (24), appartenant au volant (19), gorge (24) à l'intérieur de laquelle, la vis (17) peut tourner librement, indépendamment de l'écrou (18).

8. Dispositif selon la revendication 7, **caractérisé en ce que** les moyens pour permettre la rotation de la vis (17) comportent un élément élastique (14) assurant, en position décrabotée, le maintien de la vis (17) à l'intérieur de la gorge (24).

## Claims

1. Device for coupling two shafts (2, 3) which are intended for rotating with respect to a casing (4), in the prolongation of one another substantially about an axis (1), the device comprising a dog clutch (9) making it possible for one of the shafts (3) to drive the other (2) and clutch release means making it possible to uncouple the dog clutch (9) from a clutch engagement position toward a clutch release position, the clutch release means comprising a screw secured to one of the shafts (3), a nut secured to a flywheel (19) and cooperating with the screw (17), the screw (17) and the nut (18) having an axis coinciding substantially with the axis (1) of rotation of the shafts (2, 3), and a brake (23) for braking the rotation of the flywheel (19) with respect to the casing (4), in the clutch engagement position, the braking of the flywheel (19) slackening the nut (18) of the screw (17) and driving one of the shafts (3) in translational motion along said axis (1), so as to uncouple the dog clutch (9), the brake (23) comprising a friction element (25) intended for rubbing against a surface (26) of the flywheel (19) during braking and means (27) for controlling the brake (23), **characterized in that** the friction element (25) is formed by a helical spring (25), the inside diameter of which is variable as a function of the tension of the helical spring (25), so as to come into contact with the surface (26) of the flywheel (19) during braking.

2. Device according to Claim 1, **characterized in that**, when the means (27) for controlling the brake (23) are at rest, the helical spring (25) is tensioned and is kept at a distance from the surface (26) of the flywheel (19), and **in that**, when the means (27) for controlling the brake (23) are activated, the helical spring (25) is relaxed and the helical spring (25) is in contact with the surface (26) of the flywheel (19).

3. Device according to Claim 2, **characterized in that** the means (27) for controlling the brake (23) comprise a ball (31) and means (32) for displacing the ball (31) from a first position, in which the ball (31) keeps the helical spring (25) tensioned, toward a second position, in which the helical spring (25) is relaxed.

4. Device according to Claim 3, **characterized in that** the means (32) for displacing the ball (31) comprise a fusible element (33), **in that**, when the fusible element (33) is in the solid state, it keeps the ball (31) in the first position, and **in that**, when the fusible element (33) is in the liquid state, the ball (31) is driven by the helical spring (25) toward the second position.

5. Device according to Claim 4, **characterized in that** the means (32) for displacing the ball (31) comprise an electrical resistor (34) capable of heating the fusible element (33) by the Joule effect.

6. Device according to one of the preceding claims, **characterized in that** it comprises means (14, 24) for allowing the screw (17) to rotate independently of the nut (18) in the clutch release position.

7. Device according to Claim 6, **characterized in that** the means for allowing the rotation of the screw (17) comprise a groove (24) belonging to the flywheel (19), within which groove (24) the screw (17) can rotate freely, independently of the nut (18).

8. Device according to Claim 7, **characterized in that** the means for allowing the rotation of the screw (17) comprise an elastic element (14) which, in the clutch release position, ensures that the screw (17) is held within the groove (24).

## Patentansprüche

1. Vorrichtung zur Kupplung von zwei Wellen (2, 3), die dazu bestimmt sind, bezüglich eines Gehäuses (4) in ihrer gegenseitigen Verlängerung im Wesentlichen um eine Achse (1) zu drehen, wobei die Vorrichtung eine Kupplungsklaue (9), die es einer der Wellen (3) ermöglicht, die andere (2) anzutreiben, und Mittel zum Ausrücken aufweist, die es ermöglichen, die Klaue (9) aus einer eingerückten Stellung in eine ausgerückte Stellung auszukuppeln, wobei die Ausrückmittel eine fest mit einer der Wellen (3) verbundene Schraube und eine fest mit einem Schwungrad (19) verbundene und mit der Schraube (17) zusammenwirkende Mutter, wobei die Achse der Schraube (17) und der Mutter (18) im Wesentlichen mit der Drehachse (1) der Wellen (2, 3) zusammenfällt, und eine Bremse (23) der Drehung des Schwungrads (19) bezüglich des Gehäuses (4) in der eingerückten Stellung aufweisen, wobei das Bremsen des Schwungrads (19) die Mutter (18) von der Schraube (17) löst und eine der Wellen (3) translatorisch entlang der Achse (1) antreibt, um die Klaue (9) zu entkuppeln, wobei die Bremse (23) ein Reibungselement (25), das dazu bestimmt ist, beim Bremsen gegen eine Fläche (26) des Schwungrads (19) zu reiben, und Mittel (27) aufweist, um die Bremse (23) zu steuern, **dadurch gekennzeichnet, dass** das Reibungselement (25) von einer Spiralfeder (25) gebildet wird, deren Innendurchmesser in Abhängigkeit von der Spannung der Spiralfeder (25) variabel ist, um beim Bremsen mit der Fläche (26) des Schwungrads (19) in Kontakt zu kommen.

2. Vorrichtung nach Anspruch 1, **dadurch gekennzeichnet, dass**, wenn die Mittel (27) zur Steuerung der Bremse (23) in der Ruhestellung sind, die Spiralfeder (25) gespannt ist und in Abstand zur Fläche (26) des Schwungrads (19) gehalten wird, und dass, wenn die Mittel (27) zur Steuerung der Bremse (23) aktiviert werden, die Spiralfeder (25) entspannt wird und mit der Fläche (26) des Schwungrads (19) in Kontakt ist.

3. Vorrichtung nach Anspruch 2, **dadurch gekennzeichnet, dass** die Mittel (27) zur Steuerung der Bremse (23) eine Kugel (31) und Mittel (32) zum Verschieben der Kugel (31) von einer ersten Stellung, in der die Kugel (31) die Spiralfeder (25) gespannt hält, in eine zweite Stellung aufweisen, in der die Spiralfeder (25) entspannt wird.

4. Vorrichtung nach Anspruch 3, **dadurch gekennzeichnet, dass** die Mittel (32) zum Verschieben der Kugel (31) ein schmelzbares Element (33) aufweisen, dass das schmelzbare Element (33), wenn es im festen Zustand ist, die Kugel (31) in der ersten Stellung hält, und dass, wenn das schmelzbare Element (33) im flüssigen Zustand ist, die Kugel (31) von der Spiralfeder (25) in die zweite Stellung angetrieben wird.

5. Vorrichtung nach Anspruch 4, **dadurch gekennzeichnet, dass** die Mittel (32) zum Verschieben der Kugel (31) einen elektrischen Widerstand (34) aufweisen, der das schmelzbare Element (33) durch Joule-Effekt erwärmen kann.

6. Vorrichtung nach einem der vorhergehenden Ansprüche, **dadurch gekennzeichnet, dass** sie Mittel (14, 24) aufweist, um in der ausgerückten Stellung die Drehung der Schraube (17) unabhängig von der Mutter (18) zu erlauben.

7. Vorrichtung nach Anspruch 6, **dadurch gekennzeichnet, dass** die Mittel, um die Drehung der Schraube (17) zu erlauben, eine Kehle (24) aufweisen, die zum Schwungrad (19) gehört, wobei die Schraube (17) im Inneren der Kehle (24) unabhängig von der Mutter (18) frei drehen kann.

8. Vorrichtung nach Anspruch 7, **dadurch gekennzeichnet, dass** die Mittel, um die Drehung der Schraube (17) zu erlauben, ein elastisches Element (14) aufweisen, das in der ausgerückten Stellung den Halt der Schraube (17) im Inneren der Kehle (24) gewährleistet.
